# EUROPÄISCHE PATENTSCHRIFT

(11) **EP 1 287 606 B1**
(45) Veröffentlichungstag und Bekanntmachung des Hinweises auf die Patenterteilung: **10.02.2010**
(21) Anmeldenummer: 01943241.8
(22) Anmeldetag: 10.04.2001
(51) Int. Cl.: H02M 3/158

(54) **SPANNUNGSWANDLER**
VOLTAGE TRANSFORMER
TRANSFORMATEUR DE TENSION

(30) Priorität: 13.04.2000 WO PCT/DE00/01154
(43) Veröffentlichungstag der Anmeldung: 05.03.2003
(73) Patentinhaber: Infineon Technologies AG, 81669 München (DE)
(72) Erfinder: TIHANYI, Jenoe, 85551 Kirchheim (DE)
(74) Vertreter: Bickel, Michael
(86) Internationale Anmeldenummer: PCT/EP2001/004123
(87) Internationale Veröffentlichungsnummer: WO 2001/080410

(56) Entgegenhaltungen:
- US-A- 5 410 467
- PATENT ABSTRACTS OF JAPAN vol. 1998, no. 11, 30. September 1998 (1998-09-30) & JP 10 174431 A (OKI ELECTRIC IND.), 26. Juni 1998 (1998-06-26)
- PATENT ABSTRACTS OF JAPAN vol. 1995, no. 10, 30. November 1995 (1995-11-30) & JP 07 170746 A (NIPPONDENSO CO.), 4. Juli 1995 (1995-07-04)
- PATENT ABSTRACTS OF JAPAN vol. 2000, no. 04, 31. August 2000 (2000-08-31) & JP 2000 011673 A (MATSUSHITA ELECTRIC IND.), 14. Januar 2000 (2000-01-14)
- PATENT ABSTRACTS OF JAPAN vol. 1995, no. 03, 28. April 1995 (1995-04-28) & JP 06 339271 A (MATSUSHITA ELECTRIC WORKS), 6. Dezember 1994 (1994-12-06)

## Beschreibung

Die vorliegende Erfindung betrifft einen Spannungswandler (buck converter) gemäß den Merkmalen des Oberbegriffs des Anspruchs 1. (Siehe JP-A-10174431 und US-A-5410467).

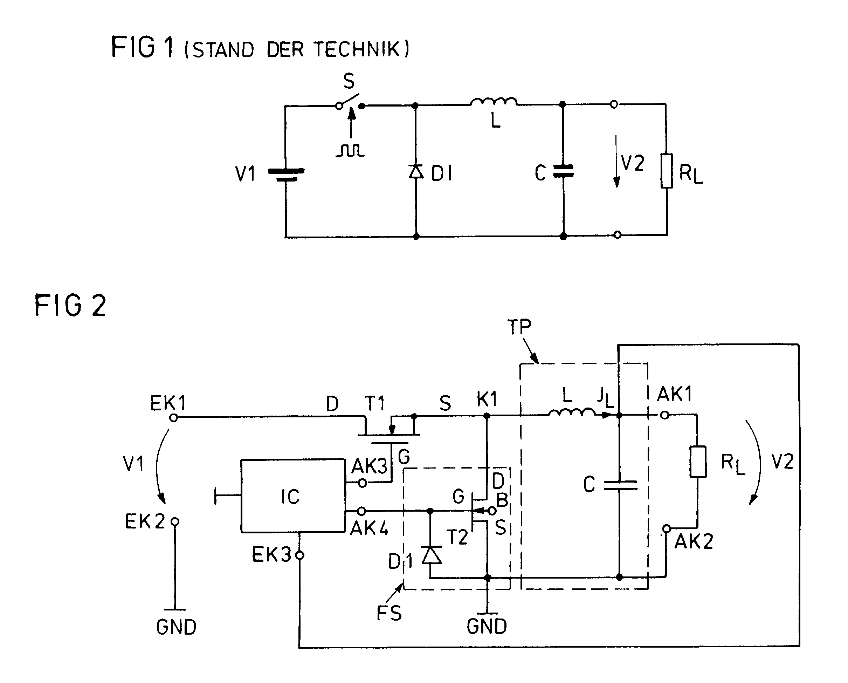

Ein derartiger Spannungswandler ist beispielsweise aus B. Murari, F. Bertotti, G.A. Vignola: "Smart Power ICs - Technologies an Applications", Springer Verlag, Berlin, 1996, Seite 287 oder aus U. Tietze, Ch. Schenk: "Halbleiterschaltungstechnik", 9. Auflage, Springer Verlag, Berlin, 1991, Seite 564, bekannt. Der Aufbau und die Funktionsweise eines derartigen Spannungswandlers nach dem Stand der Technik wird nachfolgend anhand der beigefügten Figur 1 erläutert.

Aufgabe eines Spannungswandlers ist es, eine Gleichspannung V1 in eine niedrigere Gleichspannung V2 zur Versorgung einer Last R_{L} umzusetzen. Dazu ist bei dem bekannten Spannungswandler eine Reihenschaltung eines Schalters S, einer Spule L und eines Kondensators C parallel zu der Gleichspannungsquelle V1 geschaltet, wobei die Last parallel zu dem Kondensator C angeschlossen ist. Eine Diode DI ist parallel zu der Reihenschaltung aus Spule und Kapazität C geschaltet. Ist der Schalter S geschlossen, so fließt ein Strom von der Spannungsquelle V1 über die Spule L auf die Kapazität C und über die Last R_{L}, der Strom durch die Kapazität steigt dabei kontinuierlich an. Über der Diode liegt die Gleichspannung V1 an, wobei die Diode DI bei geschlossenem Schalter S sperrt. Wird der Schalter S anschließend geöffnet, kehrt sich die über der Spule L anliegende Spannung um, wobei der Strom durch die Spule L seine Richtung beibehält und abzunehmen beginnt. Die Umkehr der Spannung über der Spule bewirkt, dass das Potential an dem Knoten, der dem Schalter und der Spule gemeinsam ist, absinkt. Die Diode DI wird dadurch leitend und übernimmt den von der Spule L auf den Kondensator C und über die Last R_{L} fließenden Strom. Die Reihenschaltung aus Spule L und Kondensator C wirkt als Tiefpassfilter und wandelt die mittels des Schalters S getaktet an diese Reihenschaltung angelegte Spannung V1 in eine kontinuierliche Ausgangsspannung V2 um, die geringer als die Eingangsspannung V1 ist. Der Wert der Ausgangsspannung V2 ist über die Frequenz, mit der der Schalter ein- und ausgeschaltet wird und über die Zeitdauer, für welche der Schalter S jeweils geöffnet und geschlossen ist, einstellbar.

Problematisch, insbesondere bei sehr hohen Schaltfrequenzen, ist, dass nach dem Öffnen des Schalters S, wenn die Diode DI leitet, Ladung in dem pn-Übergang der Diode DI gespeichert wird. Diese gespeicherte Ladung bewirkt, dass die Diode DI auch nach dem Schließen des Schalters S, wenn die Diode DI sperren soll, noch kurzzeitig leitet bis die gespeicherte Ladung abgeflossen ist. Dies führt zu Schaltverlusten, die mit steigender Schaltfrequenz zunehmen. Im übrigen sind bei leitender Diode DI die an der Diode DI hervorgerufenen Verluste unerwünscht.

Zur Reduzierung dieser Verluste ist es bekannt, anstelle der Diode einen Feldeffekttransistor, insbesondere einen MOSFET (Metal Oxide Semiconductor Field-Effect-Transistor), zu verwenden, der angesteuert durch eine Ansteuerschaltung immer dann leiten soll, wenn der Schalter sperrt. Die dazu verwendeten MOSFET weisen eine integrierte Freilaufdiode auf, die parallel zu der Drain-Source-Strecke des MOSFET liegt und deren Verschaltung der Verschaltung der Diode DI nach Figur 1 entspricht. Diese Freilaufdiode ist dadurch ausgebildet, dass bei bekannten MOSFET die Source-Zone und die Body-Zone zur Erzielung einer hohen Spannungsfestigkeit des FET kurzgeschlossen sind. Derartige FET sperren nur bei Anlegen einer Flussspannung in Drain-Source-Richtung (Vorwärtsrichtung), wenn keine Ansteuerspannung zwischen Gate und Source anliegt, wobei diese Flussspannung bei n-Kanal-FET eine positive Spannung und bei p-Kanal-FET eine negative Spannung ist in Drain-Source-Richtung ist. Die Spannungsfestigkeit kann bei Leistungs-FET bis zu einigen hundert Volt betragen. Bei Anlegen einer Spannung in Rückwärtsrichtung, d.h. bei Anlegen einer negativen Drain-Source-Spannung bei n-Kanal-FET und einer positiven Drain-Source-Spannung bei p-Kanal-FET leiten die bekannten FET bereits bei Erreichen der Einsatzspannung der Freilaufdiode. Dieser Effekt ist bei Verwendung bekannter FET als Ersatz für die Diode in Spannungswandlern erwünscht.

Zur Vermeidung von Querströmen, also von Strömen, die über den Schalter und direkt über den FET abfließen dürfen der Schalter und der FET nicht gleichzeitig leiten. Kurz nach dem Öffnen des Schalters, wenn der FET leiten soll aber noch nicht vollständig leitet, übernimmt die integrierte Freilaufdiode des FET den Strom von der Spule bis der FET vollständig leitet. Die an dem vollständig leitenden FET anfallenden Verluste sind geringer als bei Verwendung einer Diode gemäß Figur 1 als Freilaufelement.

Allerdings wird auch bei derartigen Spannungswandlern eine Ladung in der Freilaufdiode des FET gespeichert, wobei die Ladung bewirkt, dass auch nach Sperren des FET die Freilaufdiode noch kurzzeitig leitet bis die gespeicherte Ladung abgeflossen ist. Dies führt zu Schaltverlusten, die insbesondere bei hohen Schaltfrequenzen erheblich sein können.

Ziel der vorliegenden Erfindung ist es daher einen Spannungswandler zur Verfügung zu stellen, bei dem die Schaltverluste gegenüber bekannten Spannungswandlern reduziert sind.

Dieses Ziel wird durch einen Spannungswandler gemäß den Merkmalen des Patentanspruchs 1 gelöst.

Gemäß der Erfindung weist die Freilaufschaltung einen zweiten spannungsgesteuerten Schalter mit einem Steueranschluss und einer zwischen einem ersten und zweiten Laststreckenanschluss ausgebildeten Laststrecke auf, wobei der zweite Schalter als MOSFET ausgebildet ist, dessen Body-Zone floatend ausgebildet, das heißt nicht an ein definiertes Potential angeschlossen, oder über einen ohmschen Widerstand an die Source-Zone angeschlossen ist. Der Gate-Anschluss eines solchen MOSFET bildet den Steueranschluss des zweiten Schalters, die Source- und Drain-Anschlüsse bilden die ersten und zweiten Laststreckenanschlüsse und die Drain-Source-Strecke des MOSFET bildet die Laststrecke des zweiten Schalters.

Bei dem in dem erfindungsgemäßen Spannungswandler als Freilaufelement eingesetzten MOS-Transistor ist durch die floatende Anordnung der Body-Zone kein Kurzschluss zwischen der Body-Zone und der Source-Zone vorhanden. Der den zweiten Schalter bildende MOS-Transistor sperrt somit nicht nur bei Anlegen einer Spannung in Vorwärtsrichtung, das heißt bei einer positiven Drain-Source-Spannung bei einem n-leitenden MOSFET und einer negativen Drain-Source-Spannung bei einem p-leitenden MOSFET, sondern auch bei Anlegen einer Spannung in Rückwärtsrichtung, das heißt bei einer negativen Drain-Source-Spannung bei einem n-leitenden MOSFET und einer positiven Drain-Source-Spannung bei einem p-leitenden MOSFET, wenn jeweils keine Gate-Source-Spannung anliegt. Derartige Transistoren werden auch als "in Rückwärtsrichtung sperrende FET" (rückwärtssperrende FET, Reverse-Blocking FET, RB-FET) bezeichnet. Die Sperrspannung derartiger MOSFET in Rückwärtsrichtung (Source-Drain-Richtung) ist üblicherweise kleiner als die Sperrspannung in Vorwärtsrichtung (Drain-Source-Richtung). Die Sperrspannung in Source-Drain-Richtung liegt wenigstens im Bereich von einigen Volt und ist höher als die Einsatzspannung einer integrierten Freilaufdiode bei herkömmlichen MOSFET.

Bei Verwendung eines derartigen MOSFET als zweiter Schalter wird nach Öffnen des ersten Schalters, wenn der MOSFET leitend angesteuert wird, keine Ladung in dem MOSFET gespeichert, die bei anschließendem Sperren des MOSFET zu Schaltverlusten führen könnte.

Vorteilhafte Ausgestaltungen der Erfindung sind Gegenstand der Unteransprüche.

Gemäß einer Ausführungsform der Erfindung ist vorgesehen, bei einem als zweiten Schalter verwendeten rückwärtssperrenden FET mit floatend angeordneter Body-Zone ein Gleichrichterelement zwischen dessen ersten Laststreckenanschluss, das heißt den Source-Anschluss, und dessen Steueranschluss, das heißt den Gate-Anschluss, zu schalten. Wird bei dem erfindungsgemäßen Spannungswandler der erste Schalter geöffnet so wechselt die über der Laststrecke des rückwärtssperrenden FET anliegende Spannung ihr Vorzeichen und der rückwärtssperrende FET wird angesteuert durch das Gleichrichterelement leitend. Da bei dem rückwärtssperrenden FET keine Freilaufdiode mit pn-Übergang unmittelbar zwischen den ersten und zweiten Laststreckenanschluss geschaltet ist, treten Ladungsspeichereffekte, die zu Schaltverlusten bei einem späteren Sperren des als MOSFET ausgebildeten zweiten Schalters führen könnten, nicht auf. Auf die Freilaufdiode kann bei dieser Ausführungsform deshalb verzichtet werden, weil der, rückwärtssperrende MOSFET, der als zweiter Schalter verwendet, wird, nach dem Öffnen des ersten Schalters angesteuert durch das Gleichrichterelement sofort leitend wird.

Gemäß einer weiteren Ausführungsform ist eine Schottky-Diode parallel zu der Laststrecke des zweiten Schalters geschaltet ist. Wird bei einem derartigen Spannungswandler der erste Schalter geöffnet so wechselt die über der Laststrecke des zweiten Schalters anliegende Spannung ihr Vorzeichen und die parallel zu der Laststrecke des zweiten Schalters geschaltete Schottky-Diode wird leitend und übernimmt den Strom einer in dem Tiefpassfilter vorhandenen Induktivität. Wenn der zweite Schalter anschließend angesteuert durch eine Ansteuerschaltung leitend wird, dann übernimmt der zweite Schalter diesen Strom, wobei die Schottky-Diode sofort sperrt, wenn die Spannung über der Laststrecke des zweiten Schalters unter den Wert der Einsatzspannung der Schottky-Diode abfällt. In der Schottky-Diode wird keine Ladung gespeichert, die nach einem Sperren des zweiten Schalters zu Schaltverlusten führen können.

Gemäß einer Ausführungsform der Erfindung ist eine Ansteuerschaltung vorgesehen, die an den Steueranschluss des zweiten Schalters angeschlossen ist, um den zweiten Schalter anzusteuern. Bei Verwendung eines rückwärtssperrenden FET mit einem Gleichrichterelement zwischen dem Source-Anschluss und dem Gate-Anschluss, dient die Ansteuerschaltung dazu, die in dem FET vorhandene Gate-Kapazität - welche über das Gleichrichterelement aufgeladen wird, um den MOSFET leitend anzusteuern - über die Ansteuerschaltung zu entladen, um den MOSFET dadurch zu sperren.

Bei Verwendung eines rückwärtssperrenden FET mit parallel geschalteter Schottky-Diode und ohne Gleichrichterelement zwischen Source und Gate dient die Ansteuerschaltung sowohl dazu, den FET anzusteuern, um ihn leitend zu machen, als auch dazu, den FET anzusteuern, um ihn zu sperren.

Vorteilhafterweise ist auch der erste Schalter als Feldeffekttransistor, insbesondere als MOSFET, ausgebildet, der durch eine Ansteuerschaltung angesteuert ist. Zweckmäßigerweise ist eine Ansteuerschaltung mit zwei Ausgängen zum Ansteuern des ersten und zweiten Schalters vorgesehen, wobei die Ansteuerschaltung derart ausgebildet ist, dass sichergestellt ist, dass nur jeweils einer der beiden Schalter leitet. Dadurch werden Querströme, also Ströme, die direkt über den ersten und zweiten Schalter unter Kurzschließen des Tiefpassfilters und der Last an die Spannungsquelle zurückfließen, vermieden.

Gemäß einer Ausführungsform der Erfindung erfolgt die Ansteuerung des ersten und/oder zweiten Schalters abhängig von einer an den Ausgangsklemmen abgreifbaren Ausgangsspannung. Die Ausgangsspannung kann dadurch bei Änderungen der an die Ausgangsklemmen angeschlossenen Last nachgeregelt werden. Anstelle der Ausgangsspannung kann der Ansteuerschaltung auch ein von einem Strom durch die Spule der Tiefpassanordnung abhängiges Signal zugeführt werden.

Der erfindungsgemäße Spannungswandler wird nachfolgend anhand von Ausführungsbeispielen in Figuren näher erläutert. In den Figuren zeigt:
- Fig. 1: einen Spannungswandler nach dem Stand der Technik;
- Fig. 2: einen erfindungsgemäßen Spannungswandler gemäß einer ersten Ausführungsform;
- Fig. 3: einen erfindungsgemäßen Spannungswandler gemäß einer zweiten Ausführungsform;
- Fig. 4: ein Ersatzschaltbild eines MOSFET, der als zweiter Schalter dient,
- Fig. 5: einen Querschnitt durch einen in Rückwärtsrichtung sperrenden MOSFET gemäß einem Ausführungsbeispiel,
- Fig. 6: eine Kennlinie eines MOSFET gemäß der Figuren 4 und 5.

In den Figuren bezeichnen, sofern nicht anders angegeben, gleiche Bezugszeichen gleiche Bauteile und Größen mit gleicher Bedeutung.

Der in Fig. 2 dargestellte erfindungsgemäße Spannungswandler weist ein Eingangsklemmenpaar EK1, EK2 zum Anlegen einer Eingangsspannung V1 auf, wobei eine der beiden Eingangsklemmen in dem Ausführungsbeispiel an ein Bezugspotential GND, üblicherweise Masse, angeschlossen ist. Parallel zu den Eingangsklemmen EK1, EK2 ist eine Reihenschaltung eines ersten Schalters T1 und eines Tiefpassfilters TP geschaltet, wobei das Tiefpassfilter TP ein Ausgangsklemmenpaar AK1, AK2 zum Bereitstellen einer Ausgangsspannung V2 für eine Last R_{L} aufweist. Der erste Schalter T1 ist in dem Ausführungsbeispiel als MOSFET ausgebildet, dessen Drain-Source-Strecke D-S zwischen der ersten Eingangsklemme EK1 und dem Tiefpassfilter TP verschaltet ist und dessen Gate-Elektrode G an eine Ausgangsklemme AK3 einer Ansteuerschaltung IC angeschlossen ist. Die Ansteuerschaltung dient zur Ansteuerung des MOSFET T1. Das Tiefpassfilter TP ist in dem Ausführungsbeispiel als LC-Glied, das heißt als Reihenschaltung einer Induktivität L und einer Kapazität C ausgebildet, wobei die Kapazität C parallel zu den Ausgangsklemmen AK1, AK2 angeschlossen ist.

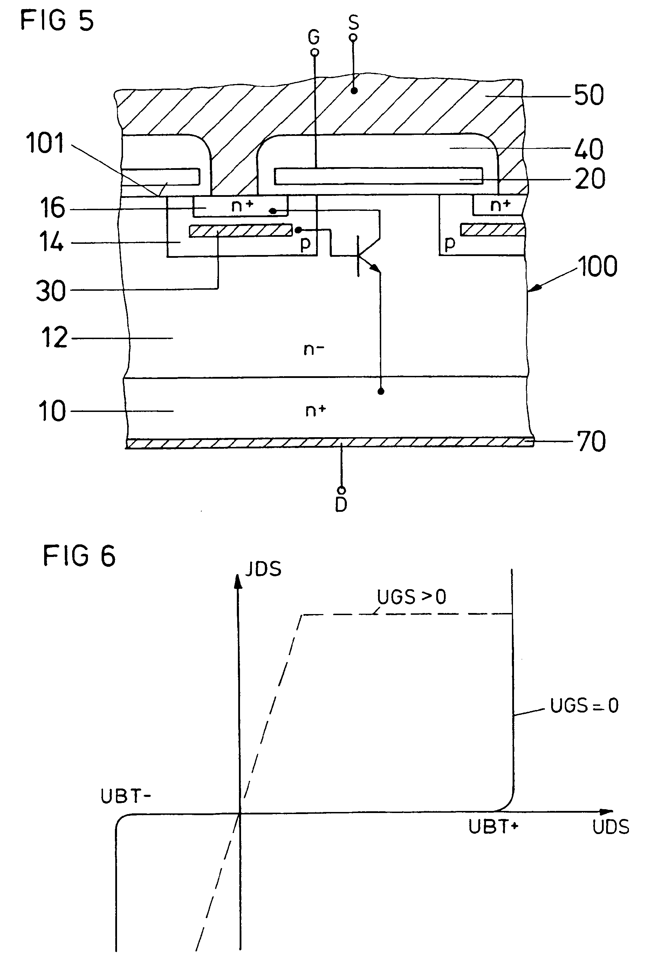

Parallel zu dem Tiefpassfilter TP ist eine Freilaufschaltung FS geschaltet, die erfindungsgemäß einen zweiten spannungsgesteuerten Schalter T2 mit einem Steueranschluss G und einer zwischen einem ersten Laststreckenanschluss S und einem zweiten Laststreckenanschluss D ausgebildeten Laststrecke aufweist. Der zweite Schalter T2 ist als rückwärtssperrender n-Kanal-FET ausgebildet, d.h. er sperrt sowohl bei Anlegen einer positiven Spannung zwischen dem Drain-Anschluss D und dem Source-Anschluss S auch bei Anlegen einer positiven Spannung zwischen der Source-Elektrode S und der Drain-Elektrode D, also in Rückwärtsrichtung. Dazu ist eine Body-Zone im Inneren des Transistors T2 floatend angeordnet oder über einen ohmschen Widerstand an eine Source-Zone angeschlossen was anhand von Figur 5 noch erläutert werden wird. Die floatende Anordnung der Body-Zone ist in Figur 2 durch den nicht verschalteten Anschluss B der Body-Zone, der auch als Substratanschluss bezeichnet wird, ersichtlich.

Die Drain-Source-Strecke D-S des Transistors T2 ist parallel zu dem LC-Glied geschaltet ist. Eine Diode D1 als Gleichrichterelement ist zwischen den Source-Anschluss S und den Gate-Anschluss G des zweiten Transistors T2 geschaltet.

Liegt bei dem erfindungsgemäßen Spannungswandler eine Eingangsspannung V1 an dem Eingangsklemmenpaar EK1, EK2 an und leitet zunächst der erste Transistor T1 und sperrt der zweite Transistor T2, so liegt über der Drain-Source-Strecke D-S des zweiten Transistors T2 annäherungsweise die gesamte Eingangsspannung V1 an. Bei leitendem ersten Transistor T1 fließt ein Strom über die Spule L auf die Kapazität C und über die Last R_{L}. Der Strom durch die Spule L steigt dabei kontinuierlich an. Sperrt der erste Transistor T1, so behält der Strom durch die Spule L seine Richtung bei, die über der Spule L anliegende Spannung wechselt jedoch ihr Vorzeichen. Dadurch sinkt das Potential an dem der Spule L und dem ersten bzw. zweiten Transistor T1, T2 gemeinsamen Knoten K1 auf einen Wert unter den Wert des Bezugspotentials GND ab. Die zwischen den Source-Anschluss S und den Gate-Anschluss G des zweiten Transistors T2 geschaltete Diode D1 leitet und lädt das Gate G des zweiten Transistors T2 auf ein gegenüber dem Potentialwert an dem Knoten K1 positives Potential auf. Der zweite Transistor T2 leitet dadurch und schließt den Stromkreis zwischen dem Kondensator, bzw. der Last R_{L} und der Spule L.

Die Diode D1 ermöglicht die Verwendung eines rückwärtssperrenden FET T2 als zweiten Schalter, bei dem keine Freilaufdiode unmittelbar zwischen den Source-Anschluss S und den Drain -Anschluss D geschaltet ist. Auf die Freilaufdiode kann deshalb verzichtet werden, weil unmittelbar nach dem Sperren des ersten Transistors T1, wenn das Potential an dem Knoten K1 absinkt, der zweite Transistor T2 angesteuert durch die Diode D1 leitend wird.

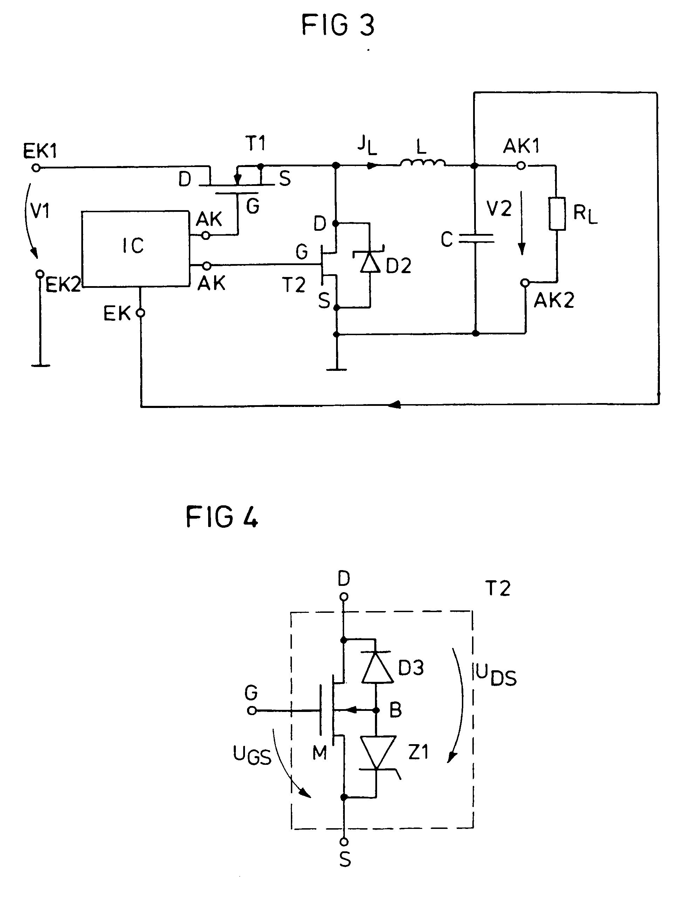

Fig. 4 zeigt ein Ersatzschaltbild eines rückwärtssperrenden MOSFET T2, wie er als zweiter Schalter bei dem erfindungsgemäßen Spannungswandler Verwendung findet Bei diesem MOSFET, bei dem der Source-Bereich S und der Body-Bereich B nicht kurzgeschlossen sind, ist eine Zenerdiode Z1 in Sperrrichtung zwischen dem Source-Anschluss S und dem Body-Bereich B eines FET M gebildet. Des weiteren ist eine Diode D3 in Flussrichtung zwischen dem Body-Bereich B und dem Drain-Anschluss D ausgebildet. Liegt bei einem derartigen Bauelement keine Steuerspannung U_{GS} zwischen dem Gate-Anschluss und dem Source-Anschluss S an, so sperrt der FET M. Bei Anlegen einer positiven Spannung zwischen dem Drain-Anschluss D und dem Source-Anschluss S ist die Diode D3 in Sperrrichtung gepolt, so dass auch kein Strom unter Umgehung des FET M fließen kann. Liegt eine negative Drain-Source-Spannung U_{DS} an, ist die Diode D3 in Flussrichtung und die Zenerdiode Z1 in Sperrrichtung gepolt. Ab Erreichen der Durchbruchspannung der Zenerdiode Z1 fließt ein Strom über die Zenerdiode Z1 und die Diode D3 unter Umgehung des FET M. Die Durchbruchspannung der Zenerdiode Z1 beträgt einige Volt und ist wesentlich größer als die Einsatzspannung von Freilaufdioden, die bei herkömmlichen MOSFET in Flussrichtung zwischen dem Source-Anschluss und dem Drain-Anschluss ausgebildet sind. Der zweite Transistor T2 sperrt also auch in Source-Drain-Richtung.

Figur 5 zeigt ein Ausführungsbeispiel zur Realisierung eines solchen in Rückwärtsrichtung sperrenden MOSFET.

Der MOSFET weist vorzugsweise eine Vielzahl gleichartig aufgebauter Transistorzellen auf, die gemeinsam verschaltet sind und von denen jede die Funktion eines Transistors erfüllt. Die Stromfestigkeit des Transistors steigt dabei mit der Anzahl der vorhandenen Transistorzellen, von denen in Figur 1 lediglich eine vollständig dargestellt ist. Der zellenartige Aufbau eines MOS-Transistors ist im übrigen hinlänglich bekannt und beispielsweise in Stengl/Tihanyi: "Leistungs-MOSFET-Praxis", Pflaum Verlag, München, 1992, Seite 34 beschrieben.

Der in Fig. 5 dargestellte MOSFET ist als n-leitender MOSFET ausgebildet. Die aktiven Bereiche dieses MOS-Transistors sind in einem Halbleiterkörper 100 realisiert, der ein stark n-dotierte Zone, beispielsweise ein Substrat 10, aufweist, auf welches, beispielsweise durch Epitaxie, eine schwächer n-dotierte Schicht 12 aufgebracht ist. In diese Schicht 12 ist ausgehend von einer Vorderseite 101 des Halbleiterkörpers 100 eine p-dotierte Wanne 14 eingebracht, welche die Body-Zone des MOS-Transistors bildet. In dieser p-dotierten Body-Zone 14 ist eine stark n-dotierte Zone 16 ausgebildet.

Die stark n-dotierte Zone 16 bildet die Source-Zone des MOS-Transistors und ist durch eine Source-Elektrode S, beispielsweise aus Metall oder Polysilizium, kontaktiert. Das stark dotierte Substrat 10 und die schwächer dotierte Zone 12 bilden die Drain-Zone des MOS-Transistors, die an einer Rückseite des Halbleiterkörpers durch eine elektrisch leitende Schicht 11, beispielsweise eine Metallisierung, kontaktiert ist. Die schwächer n-dotierte Zone 12 dient als Driftstrecke des Transistors.

Zur Ausbildung eines leitenden Kanals in der zwischen der Source-Zone 16 und der Driftzone 12 angeordneten Body-Zone 14 ist eine Gate-Elektrode 20 vorgesehen, die durch eine Isolationsschicht gegenüber der Source-Elektrode S und dem Halbleiterkörper 100 isoliert ist.

Bei dem dargestellten MOS-Transistor ist die Body-Zone 14 des MOS-Transistors floatend angeordnet, d.h. diese Zone ist an kein definiertes Potential bzw. an keinen extern verschalteten Anschluss des Transistors angeschlossen. Die Body-Zone 14 ist insbesondere nicht mit der Source-Zone 16 kurzgeschlossen. Zwischen der Source-Zone 16 und der Body-Zone 14 ist ebenso wie zwischen der Driftzone 12 und der Body-Zone 14 ein pn-Übergang vorhanden, der die Zenerdiode Z1 bildet

Durch die Abfolge der n-dotierten Drain-Zone 10, 12, der p-dotierten Body-Zone 14 und der n-dotierten Source-Zone 16 ist in dem MOS-Transistor ein parasitärer Bipolartransistor gebildet, wobei die Basis dieses Bipolartransistors durch die Body-Zone 14 gebildet ist. Dieser Bipolartransistor ist bei dem dargestellten n-leitenden MOS-Transistor ein npn-Transistor und bei einem p-leitenden MOS-Transistor ein pnp-Transistor.

Das Schaltsymbol eines solchen npn-Bipolartransistors ist zur Veranschaulichung in Fig. 5 eingezeichnet. Dieser Bipolartransistor beeinflusst die Spannungsfestigkeit des Bauteils bei Anlegen einer Spannung zwischen dem Drain-Anschluss D und dem Source-Anschluss S.

Bei Anlegen einer solchen Spannung gelangen bei einem n-leitenden Transistor p-Ladungsträger, d.h. Löcher, in die Body-Zone 14 wo diese aufgrund des dort herrschenden elektrischen Feldes neue Ladungsträger erzeugen, was bei steigender Spannung schließlich zum Durchbruch des Transistors führt. Um die Wirkung dieser in die Body-Zone 14 gelangten Löcher zu reduzieren, ist vorteilhafterweise eine Rekombinationszone 30 in der Body-Zone 14 vorgesehen. Diese Rekombinationszone 30 besteht vorzugsweise aus einem Metall, z.B. Aluminium, Platin, Titan oder Wolfram, oder aus einem Silizid und ist plattenförmig, quaderförmig, streifenförmig oder ähnlich ausgebildet. Die Rekombinationszone 30 fördert die Rekombination von in die Body-Zone 14 gelangten Löcher mit Elektronen an der Oberfläche der Rekombinationszone 30. Die Drain-Source-Spannung, bei welcher ein Spannungsdurchbruch des MOS-Transistors auftritt ist dadurch gegenüber einer Ausführungsform, bei welcher keine Rekombinationszone 30 vorgesehen ist, erhöht.

Bei herkömmlichen MOS-Transistoren sind die Body-Zone und die Source-Zone kurzgeschlossen, um die Anhäufung von Löchern in der Body-Zone zu verhindern. Die Durchbruchspannung eines MOS-Transistors gemäß Figur 5 ohne derartigen Kurzschluss, also mit floatend angeordneter Body-Zone, kann durch Vorsehen der Rekombinationszone 30 der Durchbruchspannung eines MOS-Transistors mit Kurschluss zwischen Body-Zone und Source-Zone entsprechen.

Bei einer Alternative der erfindungsgemäßen Halbbrückenschaltung ist vorgesehen, dass die Body-Zone 14 des MOS-Transistors, der den zweiten Schalter bildet, über einen sehr großen ohmschen Widerstand - insbesondere einen Widerstand im Kilo-Ohm- bis Mega-Ohm-Bereich - an die Source-Zonen 16 angeschlossen sind. Bezugnehmend auf Figur 5 kann ein solcher ohmscher Widerstand zwischen der Source-Zone 16 und der Body-Zone durch "Störung" des pn-Übergangs zwischen der Source-Zone 16 und der Body-Zone 14 erzeugt werden. Diese Störung des Kristallgitters kann beispielsweise durch Implantation von Atomen, beispielsweise Argon-Atomen, in dem Bereich des pn-Übergangs zwischen Source 16 und Body 14 oder durch "Beschießen" des pn-Übergangs mit Helium erzeugt werden.

Figur 6 zeigt die Kennlinie eines n-leitenden MOS-Transistors gemäß der Figuren 4 und 5. Dargestellt ist der Drain-Source-Strom IDS über der Drain-Source-Spannung UDS bei einer Gate-Source-Spannung UGS>0V und einer Gate-Source-Spannung UGS=0V.

Betrachtet man die Kennlinie, so wird deutlich, dass der MOS-Transistor im Sperrfall, wenn also keine Gate-Source-Spannung UGS anliegt, das heißt UGS=0V ist, bei Anlegen einer positiven Drain-Source-Spannung UDS bis zu einer Spannung UBT+, der Durchbruchspannung der Diode DS, sperrt und bei höheren Spannung in den Durchbruch geht. Der Transistor sperrt auch bei negativen Drain-Source-Spannungen UDS bis zu einer Spannung UBT-, der Durchbruchspannung der Zenerdiode Z1 wenn keine Gate-Source-Spannung anliegt. Der Transistor sperrt somit in Vorwärtsrichtung, d.h. bei positiven Drain-Source-Spannungen UDS bis zu einer Spannung UBT+ und in Rückwärtsrichtung, d.h. bei negativen Drain-Source-Spannungen UDS bis zu einer Spannung UBT-.

Die Spannung UBT- bis zu welcher der MOS-Transistor in Rückwärtsrichtung sperrt, ist üblicherweise geringer, als die Sperrspannung UBT+ in Vorwärtsrichtung. Dies resultiert aus dem üblicherweise nicht symmetrischen Aufbau von Leistungstransistoren, wie dies auch in Figur 2 veranschaulicht ist. Bei diesem Transistor ist zwischen der stark dotierten Zone 10 der Drain-Zone und der Body-Zone 14 eine schwächer dotierte Zone 12 ausgebildet, die als Driftstrecke wirkt und die bei einem n-Kanal-MOSFET bei Anlegen einer positiven Drain-Source-Spannung UDS zwischen dem Drain-Anschluss D und dem Source-Anschluss S einen Teil dieser Drain-Source-Spannung UDS übernimmt. Die Sperrspannung in Vorwärtsrichtung ist dabei maßgeblich von der Dotierung dieser Schicht 12 und der Dicke dieser Schicht 12 zwischen der stark dotierten Zone 10 und der Body-Zone 14 abhängig. Zwischen der Source-Zone 16 und der Body-Zone 14 ist in dem Ausführungsbeispiel gemäß Figur 5 keine solche schwächer dotierte Zone ausgebildet, was dazu führt, dass bei einem n-leitenden MOSFET bei Anlegen einer negativen Drain-Source-Spannung bzw. bei einer positiven Spannung zwischen dem Source-Anschluss S und dem Drain-Anschluss D die bis zum Erreichen des Durchbruchs anlegbare Spannung geringer ist.

Wird ein Bauelement gemäß Fig. 4 als zweiter Transistor T2 bei dem erfindungsgemäßen Spannungswandler eingesetzt, so wird der MOSFET M über die Diode D1 so schnell leitend, dass die Spannung in Source-Drain-Richtung des Transistors T2 den Wert der Durchbruchspannung der Zenerdiode Z1 nicht erreicht. Die Diode D3 wird nicht leitend und speichert somit keine Ladung, die bei Sperren des MOSFET M zu Schaltungsverlusten führen könnte.

In der Diode D1 wird zwar eine Ladung gespeichert, wenn der zweite Schalter T2 angesteuert wird, da diese Diode jedoch lediglich zum Aufladen des Gate G des zweiten Transistors T2 dient, kann sie entsprechend kleinflächig ausgestaltet sein, so dass die gespeicherte Ladung sehr gering ist und damit sehr schnell abgeführt werden kann, wenn der zweite Transistor T2 sperren soll. Hierdurch treten lediglich sehr geringe Schaltverluste auf.

Bei der bisherigen Betrachtung wurde davon ausgegangen, dass die Eingangsspannung V1 eine positive Spannung zwischen der ersten Eingangsklemme EK1 und der zweiten Eingangsklemme EK2 ist. Der erfindungsgemäße Spannungswandler funktioniert selbstverständlich auch für negative Eingangsspannungen, wobei die Polung der Diode D1 dann zu vertauschen ist. Die als n-Kanal Feldeffekttransistoren ausgebildeten MOSFET T1, T2 können selbstverständlich auch als p-Kanal-Feldeffekttransistoren ausgebildet sein.

Um den zweiten Transistor T2 zu sperren, ist dessen Gate-Anschluss G1 an eine zweite Ausgangsklemme AK4 der Ansteuerschaltung IC angeschlossen, welche das Gate G des zweiten Transistors T2 beispielsweise nach Bezugspotential GND entlädt, um den zweiten Transistor zu sperren.

Die Ansteuerschaltung IC ist derart ausgebildet, dass sichergestellt ist, dass nur jeweils einer der beiden Transistoren T1, T2 leitet und um somit zu verhindern, dass der Strom direkt über den ersten Transistor T1 und den zweiten Transistor T2 unter Kurzschließen des Tiefpassfilters TP und der Last R_{L} nach Bezugspotential GND abfließt. In eingeschwungenem Zustand ist die Ausgangsspannung V2 bei gleichbleibender Last R_{L} annäherungsweise konstant. Das Tiefpassfilter TP wandelt somit die getaktet an das Tiefpassfilter TP angelegte Eingangsspannung V1 in eine niedrigere Ausgangsspannung V2 um. Der Wert der Ausgangsspannung V2 ist dabei über die Schaltfrequenz des ersten Transistors, das heißt über die Frequenz, mit der der erste Transistor ein- und ausgeschaltet wird, und über die Schaltdauer, das heißt die Dauer, während derer der erste Transistor T1 nach dem Einschalten jeweils geschlossen bleibt, einstellbar.

Um bei Änderungen der Last R_{L} die Ausgangsspannung V2 über die Schaltfrequenz und die Schaltdauer nachregeln zu können, ist die erste Ausgangsklemme AK1 an eine Eingangsklemme EK3 der Ansteuerschaltung IC angeschlossen, wobei die Ansteuerschaltung IC den Wert der Ausgangsspannung V2 bei der Generierung der Schaltfrequenz und/oder der Schaltdauer berücksichtigt.

Fig. 3 zeigt eine weitere Ausführungsform eines erfindungsgemäßen Spannungswandlers, bei dem eine Schottky-Diode D2 parallel zur Laststrecke eines zweiten Schalters T2 geschaltet ist, der in dem Ausführungsbeispiel als rückwärtssperrender FET T2 ausgebildet ist, wobei die Drain-Source-Strecke D-S des FET T2 parallel zu dem LC-Glied geschaltet ist. Die Schottky-Diode ist parallel zu der Drain-Source-Strecke des Transistors T2 geschaltet.

Liegt bei dem erfindungsgemäßen Spannungswandler eine Eingangsspannung V1 an dem Eingangsklemmenpaar EK1, EK2 an und leitet zunächst der erste Transistor T1 und sperrt der zweite Transistor T2, so liegt über der Drain-Source-Strecke D-S des zweiten Transistors T2 annäherungsweise die gesamte Eingangsspannung V1 an. Die dabei in Sperrrichtung gepolte Schottky-Diode D2 sperrt.

Bei leitendem ersten Transistor T1 fließt ein Strom über die Spule L auf die Kapazität C und über die Last R_{L}. Der Strom durch die Spule L steigt dabei kontinuierlich an. Sperrt anschließend der erste Transistor T1, behält der Strom durch die Spule L seine Richtung bei, die über der Spule L anliegende Spannung wechselt jedoch ihr Vorzeichen. Dadurch sinkt das Potential an dem der Spule L und dem ersten bzw. zweiten Transistor T1, T2 gemeinsamen Knoten K1 auf einen Wert unter den Wert des Bezugspotentials GND ab. Die Schottky-Diode D2 beginnt zu leiten und übernimmt den Strom I_{L} durch die Spule. Angesteuert durch die Ansteuerschaltung IC beginnt nach dem Sperren des ersten Transistors T1 auch der zweite Transistor T2 zu leiten. Der zweite Transistor T2 und die Schottky-Diode D2 sind vorzugsweise so aufeinander abgestimmt, dass die über der Laststrecke D-S des zweiten Transistor T2 abfallende Spannung geringer ist als die Flussspannung der Schottky-Diode D2, wenn der zweite Transistor T2 vollständig leitet. Dann nämlich sperrt die Schottky-Diode D2 sofort nach dem Leiten des zweiten Transistors T2, wobei in der Schottky-Diode D2 keine Ladung gespeichert bleibt, die nach dem Sperren des zweiten Transistors T2 -angesteuert durch die Ansteuerschaltung IC- zu Schaltverlusten führen könnte.

Der zweite Transistor T2 ist ein rückwärtssperrender FET, dessen Ersatzschaltbild beispielhaft in Fig. 4 dargestellt und oben erläutert ist.

Wird ein Bauelement gemäß Fig. 4 bzw. gemäß Fig. 5 bei dem erfindungsgemäßen Spannungswandlers eingesetzt, so wird bedingt durch die parallel zur Laststrecke geschaltete Schottky-Diode D2, die Durchbruchspannung der Zenerdiode Z1 nicht erreicht, so dass auch in der Diode D3 keine Ladung gespeichert wird, die bei Sperren des MOSFET M zu Schaltungsverlusten führen könnte.

Die beiden Transistoren T1, T2 sind in dem Ausführungsbeispiel gemäß Fig. 3 an eine gemeinsame Ansteuerschaltung IC zur Ansteuerung angeschlossen. Die Ansteuerschaltung ist derart ausgebildet, dass sichergestellt ist, dass nur jeweils einer der beiden Transistoren T1, T2 leitet und um somit zu verhindern, dass der Strom direkt über den ersten Transistor T1 und den zweiten Transistor T2 unter Kurzschließen des Tiefpassfilters TP und der Last R_{L} nach Bezugspotential GND abfließt. Die Ansteuerschaltung IC macht den ersten Transistor T1 leitend und sperrt den zweiten Transistor T2, wenn die Spule L Strom aufnehmen soll, und macht den zweiten Transistor T2 leitend und sperrt den ersten Transistor T1, wenn die Stromaufnahme der Spule L abgeschlossen werden soll.

Die Ansteuerschaltung IC ist vorzugsweise als integrierte Schaltung ausgebildet, in welcher auch die Diode D1, die zur Ansteuerung des zweiten Transistors T2 dient, integriert sein kann.

### Bezugszeichenliste

- 10: Substrat
- 100: Halbleiterkörper
- 101: Vorderseite des Halbleiterkörpers
- 12: Epitaxieschicht
- 14: Body-Zone
- 16: Source-Zone
- 20: Gate-Elektrode
- 30: Rekombinationszone
- 40: Isolationsschicht
- 50: Source-Elektrode
- 70: Drain-Elektrode
- AK1, AK2: Ausgangsklemmen des Spannungswandlers
- AK3, AK4: Ausgangsklemmen der Ansteuerschaltung
- B: Substrat
- C: Kapazität
- D: Drain-Anschluss
- D1, D3: Dioden
- D2: Schottky-Diode
- DI: Diode
- EK1, EK2: Eingangsklemmen des Spannungswandlers
- EK3: Eingangsklemme der Ansteuerschaltung
- FS: Freilaufschaltung
- G: Gate-Anschluss
- GND: Bezugspotential
- IC: Ansteuerschaltung
- IDS: Drain-Source-Strom
- I_{L}: Spulenstrom
- L: Induktivität
- M: MOSFET
- R_{L}: Last
- S: Schalter
- S: Source-Anschluss
- T1: erster Transistor
- T2: zweiter Transistor
- TP: Tiefpass
- UBT-: negative Sperrspannung
- UBT+: positive Sperrspannung
- U_{DS}: Drain-Source-Spannung
- UDS: Drain-Source-Spannung
- U_{GS}: Gate-Source-Spannung
- UGS: Gate-Source-Spannung
- V1: Eingangsspannung
- V2: Ausgangsspannung
- Z1: Zenerdiode

## Patentansprüche

1. Spannungswandler, der folgende Merkmale aufweist:
ein Eingangsklemmenpaar (EK1, EK2) zum Anlegen einer Eingangsspannung (V1);
eine parallel zu dem Eingangsklemmenpaar (EK1, EK2) geschaltete Reihenschaltung eines ersten Schalters (S, T1) und eines Tiefpassfilters (TP), wobei das Tiefpassfilter (TP) Ausgangsklemmen (AK1, AK2) zum Anschließen einer Last (R_{L}) aufweist;
eine parallel zu dem Tiefpassfilter (TP) geschaltete Freilaufschaltung (FS);
**dadurch gekennzeichnet, dass**
die Freilaufschaltung (FS) einen zweiten Schalter (T2) mit einem Steuerschluss (G) und einer zwischen einem ersten Laststreckenanschluss (S) und einem zweiten Laststreckenanschluss (D) ausgebildeten Laststrecke aufweist, der als MOS-Transistor ausgebildet ist, dessen Body-Zone floatend angeordnet oder über einen ohmschen Widerstand an dessen Source-Zone angeschlossen ist.

2. Spannungswandler nach Anspruch 1,
**dadurch gekennzeichnet, dass**
ein Gleichrichterelement (D1) zwischen den ersten Laststreckenanschluss (S) und den Steueranschluss (G) des zweiten Schalters (T2) geschaltet ist.

3. Spannungswandler nach Anspruch 1 oder 2,
**dadurch gekennzeichnet, dass**
eine Schottky-Diode (D2) parallel zu der Laststrecke (D-S) des zweiten Schalters (T2) geschaltet ist.

4. Spannungswandler nach einem der vorangehenden Ansprüche,
**dadurch gekennzeichnet, dass**
das Tiefpassfilter (TP) eine Reihenschaltung einer Spule (L) und eines Kondensators (C) aufweist, wobei der Kondensator (C) parallel zu den Ausgangsklemmen (AK1, AK2) geschaltet ist.

5. Spannungswandler nach einem der vorangehenden Ansprüche,
**dadurch gekennzeichnet, dass**
der erste Schalter (T1) als Transistor, insbesondere als Feldeffekttransistor ausgebildet ist .

6. Spannungswandler nach einem der vorangehenden Ansprüche,
**dadurch gekennzeichnet, dass**
eine Ansteuerschaltung (IC) mit einer ersten Ausgangsklemme (AK3) zur Ansteuerung des ersten Schalters (T1) vorgesehen ist.

7. Spannungswandler nach Anspruch 6,
**dadurch gekennzeichnet, dass**
der erste Schalter (T1) durch die Ansteuerschaltung (IC) abhängig von der an den Ausgangsklemmen (AK1, AK2) abgreifbaren Ausgangsspannung (V2) oder abhängig von einem Strom durch die Spule (L) der Tiefpassanordnung angesteuert ist.

8. Spannungswandler nach einem der vorangehenden Ansprüche,
**dadurch gekennzeichnet, dass**
er eine an den Steueranschluss (G) des zweiten Schalters (T2) angeschlossene Ansteuerschaltung (IC) zum Ansteuern des zweiten Schalters (T2) abhängig von einem Schaltzustand des ersten Schalters (T1) aufweist.

9. Spannungswandler nach einem der vorangehenden Ansprüche,
**dadurch gekennzeichnet, dass**
eine Ansteuerschaltung (IC) für beide Schalter (T1, T2) vorgesehen ist.

10. Spannungswandler nach Anspruch 9,
**dadurch gekennzeichnet, dass**
die Ansteuerschaltung (IC) bewirkt, dass die beiden Schalter (T1, T2) nicht gleichzeitig leiten.

11. Spannungswandler nach einem der vorangehenden Ansprüche, bei dem eine Rekombinationszone in der Body-Zone des als zweiter Schalter eingesetzten MOSFET ausgebildet ist.

## Claims

1. Voltage converter having the following features:
an input terminal pair (EK1, EK2) for the application of an input voltage (V1);
a series circuit comprising a first switch (S, T1) and a low-pass filter (TP), which series circuit is connected in parallel with the input terminal pair (EK1, EK2), the low-pass filter (TP) having output terminals (AK1, AK2) for the connection of a load (R_{L});
a freewheeling circuit (FS) connected in parallel with the low-pass filter (TP);
**characterized in that**
the freewheeling circuit (FS) has a second switch (T2) having a control terminal (G) and a load path formed between a first load path terminal (S) and a second load path terminal (D), which switch is designed as a MOS transistor whose body zone is arranged in a floating fashion or is connected to its source zone via a nonreactive resistor.

2. Voltage converter according to Claim 1,
**characterized in that**
a rectifier element (D1) is connected between the first load path terminal (S) and the control terminal (G) of the second switch (T2).

3. Voltage converter according to Claim 1 or 2,
**characterized in that**
a Schottky diode (D2) is connected in parallel with the load path (D-S) of the second switch (T2).

4. Voltage converter according to one of the preceding claims,
**characterized in that**
the low-pass filter (TP) has a series circuit comprising a coil (L) and a capacitor (C), the capacitor (C) being connected in parallel with the output terminals (AK1, AK2).

5. Voltage converter according to one of the preceding claims,
**characterized in that**
the first switch (T1) is designed as a transistor, in particular as a field-effect transistor.

6. Voltage converter according to one of the preceding claims,
**characterized in that**
provision is made of a drive circuit (IC) having a first output terminal (AK3) for driving the first switch (T1).

7. Voltage converter according to Claim 6,
**characterized in that**
the first switch (T1) is driven by the drive circuit (IC) in a manner dependent on the output voltage (V2) which can be tapped off at the output terminals (AK1, AK2), or in a manner dependent on a current through the coil (L) of the low-pass arrangement.

8. Voltage converter according to one of the preceding claims,
**characterized in that**
it has a drive circuit (IC) - connected to the control terminal (G) of the second switch (T2) - for driving the second switch (T2) in a manner dependent on a switching state of the first switch (T1).

9. Voltage converter according to one of the preceding claims,
**characterized in that**
a drive circuit (IC) is provided for both switches (T1, T2).

10. Voltage converter according to Claim 9,
**characterized in that**
the drive circuit (IC) has the effect that the two switches (T1, T2) are not simultaneously in the on state.

11. Voltage converter according to one of the preceding claims,
in which a recombination zone is formed in the body zone of the MOSFET used as the second switch.

## Revendications

1. Transformateur de tension, qui a les caractéristiques suivantes :
une paire (EK1, EK2) de bornes d'entrée, pour l'application d'une tension (V1) d'entrée ;
un circuit série, monté en parallèle à la paire (EK1, EK2) de bornes d'entrée, composé d'un premier commutateur (S, T1) et d'un filtre (TP) passe-bas, le filtre (TP) passe-bas ayant des bornes (AK1, AK2) de sortie pour le raccordement d'une charge (R_{L}) ;
un circuit (FS) à roue libre monté en parallèle au filtre (TP) passe-bas ;
**caractérisé en ce que**
le circuit (FS) à roue libre a un deuxième commutateur (T2) ayant une borne (G) de commande et une section de charge formée entre une première borne (S) de section de charge et une deuxième borne (D) de section de charge, et constitué sous la forme d'un transistor MOS, dont la zone de corps est montée flottante ou est reliée à sa zone de source par une résistance ohmique.

2. Transformateur de tension suivant la revendication 1,
**caractérisé en ce que**
un élément (D1) redresseur est monté entre la première borne (S) de section de charge et la borne (G) de commande du deuxième commutateur (T2).

3. Transformateur de tension suivant la revendication 1 ou 2,
**caractérisé en ce que**
une diode (D2) de Schottky est montée en parallèle à la section (D-S) de charge du deuxième commutateur (T2).

4. Transformateur de tension suivant l'une des revendications précédentes,
**caractérisé en ce que**
le filtre (TP) passe-bas a un circuit série composé d'une bobine (L) et d'un condensateur (C), le condensateur (C) étant monté en parallèle aux bornes (AK1, AK2) de sortie.

5. Transformateur de tension suivant l'une des revendications précédentes,
**caractérisé en ce que**
le premier commutateur (T1) est constitué sous la forme d'un transistor, notamment d'un transistor à effet de champ.

6. Transformateur de tension suivant l'une des revendications précédentes,
**caractérisé en ce que**
un circuit (IC) de commande ayant une première borne (AK3) de sortie est prévue pour commander le premier commutateur (T1).

7. Transformateur de tension suivant la revendication 6,
**caractérisé en ce que**
le premier commutateur (T1) est commandé par le circuit (IC) de commande en fonction de la tension (V2) de sortie pouvant être prélevée aux bornes (AK1, AK2) de sortie ou en fonction d'un courant passant dans la bobine (L) du dispositif passe-bas.

8. Transformateur de tension suivant l'une des revendications précédentes,
**caractérisé en ce que**
il a un circuit (IC) de commande relié à la borne (G) de commande du deuxième commutateur (T2), pour commander le deuxième commutateur (T2) en fonction d'un état de commutation du premier commutateur (T1).

9. Transformateur de tension suivant l'une des revendications précédentes,
**caractérisé en ce que**
il est prévu un circuit (C) de commande pour les deux commutateurs (T1, T2).

10. Transformateur de tension suivant la revendication 9,
**caractérisé en ce que**
le circuit (C) de commande fait que les deux commutateurs (T1, T2) ne conduisent pas en même temps.

11. Transformateur de tension suivant l'une des revendications précédentes,
dans lequel une zone de recombinaison est formée dans la zone de body du MOSFET utilisé comme deuxième commutateur.
